# EUROPEAN PATENT SPECIFICATION

(11) **EP 4 343 177 B1**
(45) Date of publication and mention of the grant of the patent: **03.12.2025**
(21) Application number: 22824153.5
(22) Date of filing: 13.06.2022
(51) Int. Cl.: F16H 63/50

(54) **CENTRIFUGAL COMPENSATION CONTROL METHOD, APPARATUS AND SYSTEM FOR TRANSMISSION, AND STORAGE MEDIUM AND VEHICLE**
VERFAHREN, VORRICHTUNG UND SYSTEM ZUR ZENTRIFUGALAUSGLEICHSSTEUERUNG FÜR GETRIEBE SOWIE SPEICHERMEDIUM UND FAHRZEUG
PROCÉDÉ DE COMMANDE DE COMPENSATION CENTRIFUGE, APPAREIL ET SYSTÈME DE BOÎTE DE VITESSES, AINSI QUE SUPPORT DE STOCKAGE ET VÉHICULE

(30) Priority: 18.06.2021 CN 202110682731
(43) Date of publication of application: 27.03.2024
(73) Proprietor: Great Wall Motor Company Limited, Baoding, Hebei 071000 (CN)
(72) Inventor: LI, Zong, Baoding City, Hebei 071000 (CN); CHEN, Hongxing, Baoding City, Hebei 071000 (CN); LI, Qi, Baoding City, Hebei 071000 (CN); YAN, Haidong, Baoding City, Hebei 071000 (CN); LI, Xiaojuan, Baoding City, Hebei 071000 (CN)
(74) Representative: Klunker IP Patentanwälte PartG mbB
(86) International application number: PCT/CN2022/098388
(87) International publication number: WO 2022/262673

(56) References cited:
- CN-A- 103 591 280
- CN-A- 106 286 814
- CN-A- 108 343 733
- CN-A- 110 094 496
- CN-A- 110 094 496
- US-A1- 2004 206 599
- US-A1- 2020 361 473

## Description

### TECHNICAL FIELD

The present invention relates to the field of vehicle control technology, and in particular to a method and system of cut-in timing for centrifugal compensation control in a dual-clutch transmission.

### BACKGROUND

The dual-clutch transmission is referred to as DCT. To improve the vehicle's starting performance, shift smoothness and shift response, a centrifugal compensation strategy is adopted in the DCT to optimize a shift operation of the DCT.

CN 110 094 496 A discloses a torque control method and device, and a vehicle. The torque control method includes: clutch oil filling pressure and throttle opening of the vehicle are detected during a starting process of the vehicle; a slope of engine torque is obtained according to the clutch oil filling pressure and the throttle opening; wherein the slope of the engine torque is an increasing amount of the engine torque per unit time; and the torque of the engine is controlled according to the slope of the engine torque.

US 2004/206599 A discloses a hydraulic twin clutch for a transmission with two transmission input shafts, for a power-shift transmission in motor vehicles, with concentric arrangement of the two transmission input shafts, a driven clutch housing, two hydraulically actuated clutches with friction disks and annular piston-cylinder units, the first clutch connecting the clutch housing selectably to the first transmission input shaft and the second clutch connecting the clutch housing selectably to the second transmission input shaft. The two clutches are arranged adjacent one another, separated by a clutch web firmly connected to the clutch housing, and the two piston-cylinder units provided for the actuation of the clutch are likewise arranged adjacent one another and separated by the clutch web, between the clutches and the transmission input shafts, on a smaller diameter than the clutches. The essential advantages are compact construction combined with high torque capacity and the possibility of achieving complete compensation of the centrifugal-force-dependent pressures in the working chambers through the provision of a compensating chamber.

In existing technologies, the principal centrifugal compensation control strategy for the DCT is to centrifugally supplement a torque transmission pressure of the clutch by means of an engine speed and an actual pressure of the clutch. However, under certain working conditions, an abnormal noise may be generated by the DCT, which will affect the customer's experience.

### SUMMARY

It is an object of the present invention to provide a method and system of cut-in timing for centrifugal compensation control in a dual clutch transmission, which aim to address the problems existing in the above special circumstances.

The object is achieved by the features of independent claim 1 regarding the method and of independent claim 4 regarding the system. Further embodiments are defined in den dependent claims.

Optionally, the step of determining the vehicle condition status according to the vehicle working-condition signal may include that:
Determining that the vehicle condition status is the in-situ large-throttle starting state in case that an opening-degree from the accelerator pedal signal is greater than a first opening-degree threshold, the gear signal is at a first gear, the ESP signal is a break-free or parking signal, and the vehicle speed signal has a first speed threshold.

Determining that the vehicle condition status is the large-throttle parking state in case that the opening-degree from the accelerator pedal signal is greater than the first opening-degree threshold, the gear signal is at the first gear, the ESP signal is a braking or parking signal, and the vehicle speed signal has a second speed threshold.

Determining that the vehicle condition status is the driving and gear-shifting state in case that the opening-degree from the accelerator pedal signal is greater than a second opening-degree threshold, the gear signal is at or above a second gear, the ESP signal is the brake-free or parking signal, and the vehicle speed signal has a third speed threshold.

Optionally, the step of determining the clutch oil-filling status according to the hydraulic module signal may include that:
It is determined that the clutch oil-filling status is the status before the clutch is oil-filled in case that the position signal of the piston moves from a bottom dead center position toward a top dead center position and the position signal of the hydraulic valve plate is a switched-on signal.

It is determined that the clutch oil-filling status is the status after the clutch is oil-filled in case that the position signal of the piston moves from the top dead center position toward the bottom dead center position, and the position signal of the hydraulic valve plate is a switched-off signal.

Compared with the existing technologies, the method of centrifugal compensation control for the transmission described in this application has the following advantages that: in the present application, the vehicle working-condition signal is collected and the vehicle condition status is determined according to the vehicle working-condition signal, the hydraulic module signal is collected and the clutch oil-filling status is determined according to the hydraulic module signal, and then, the centrifugal compensation is performed on the transmission according to the vehicle condition status and the clutch oil-filling status. By adding the recognition of the accelerator pedal signal, the ESP signal, the vehicle speed signal, and the vehicle gear signal, as a condition for determining the vehicle condition status of the centrifugal compensation control strategy, and by taking a recognition of position signals of the piston and hydraulic valve plate of the hydraulic module as a condition for determining a centrifugal compensation cut-in timing of the centrifugal compensation control strategy, an operation coverage of vehicle working conditions of the centrifugal compensation control strategy is expanded, the abnormal noise of the DCT during starting or shifting is reduced, the impact of the gear during shifting is reduced, and the service life of the transmission prolonged. Moreover, the technical solution of this application is more simplified, has a low failure rate, does not require additional auxiliary hardware, and is low in cost, which has a wide range of applications, adapts to new and old models, and is conducive to upgrading old models. It can save a wire assembly as no additional system component is required. It is more convenient for after-sales troubleshooting and maintenance. The later rectification cycle is shortened, and the early identification and optimization space can provide guarantee for later rectification.

### BRIEF DESCRIPTION OF DRAWINGS

To explain the technical solutions of the embodiments of the present application more clearly, the drawings that need to be used in the description of the embodiments of the present application will be briefly introduced below. Obviously, the drawings in the following description are merely some embodiments of the present application. For persons of ordinary skills in the art, other drawings may also be obtained based on these drawings without exerting creative efforts.
FIG. 1 is a schematic diagram of a system of centrifugal compensation control for a transmission in accordance with an embodiment of the present application;
FIG. 2 is a step flow chart of a method of centrifugal compensation control for a transmission in accordance with an embodiment of the present application;
FIG. 3 is another step flow chart of a method of centrifugal compensation control for a transmission in accordance with an embodiment of the present application;
FIG. 4 is a schematic diagram of an apparatus of centrifugal compensation control for a transmission in accordance with an embodiment of the present application;
FIG. 5 is a structural block diagram of an electronic device provided by an embodiment of the present application; and
FIG. 6 is a schematic diagram of a hardware structure of the electronic equipment provided by an embodiment of the present application.

### DETAILED DESCRIPTION

The technical solutions in the embodiments of the present application will be clearly and completely described below with reference to the drawings in the embodiments of the present application. Obviously, the described embodiments are part of the embodiments of the present application, rather than all of the embodiments. Based on the embodiments in this application, all other embodiments obtained by those of ordinary skill in the art without exerting creative efforts shall fall within the protection scope of the present application.

In related technologies, the centrifugal compensation control strategy of the DCT is to centrifugally supplement the torque transmission pressure of the clutch by utilizing the engine speed and the actual pressure of the clutch. However, under certain working conditions, the DCT will produce abnormal noise and affect the customer's experience.

To overcome the above problems, the present application provides a method of centrifugal compensation control for a transmission, which aims to collect a vehicle working-condition signal, determine a vehicle condition status according to the vehicle working-condition signal; collect a hydraulic module signal, and determine a clutch the oil-filling status according to the hydraulic module signal; and perform a centrifugal compensation on the transmission according to the vehicle condition status and the clutch oil-filling status. By adding a recognition of an accelerator pedal signal, an ESP signal, a vehicle speed signal, and a vehicle gear signal, as a condition of determining the vehicle condition status of the centrifugal compensation control strategy, and by taking a recognition of position signals of a piston and a hydraulic valve plate of a hydraulic module as a condition of determining a centrifugal compensation cut-in timing of the centrifugal compensation control strategy, the operation coverage of vehicle working conditions of the centrifugal compensation control strategy is expanded, an abnormal noise during starting or shifting of the DCT is reduced, the impact of the gear during shifting is reduced, and the service life of the transmission is prolonged.

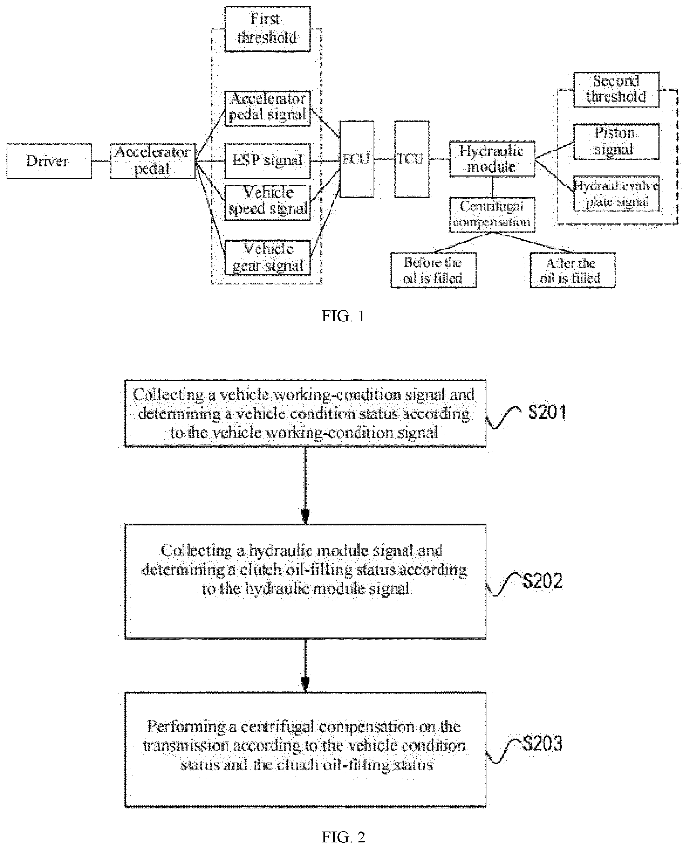

An embodiment of the present application provides a system of centrifugal compensation control for the DCT. Referring to FIG. 1, a schematic diagram of a system of centrifugal compensation control for a transmission is shown. As shown in FIG. 1, the system includes: an ECU, a TCU, an accelerator pedal, and a DCT clutch assembly.

The ECU is configured to collect a vehicle working-condition signal and determine a vehicle condition status according to the vehicle working-condition signal. The vehicle working-condition signal includes an accelerator pedal signal, an ESP signals, a gear signal, and a vehicle speed signal.

In this implementation, the ECU collects the vehicle working-condition signal while the vehicle is driving. The vehicle working-condition signal collected by the ECU includes the accelerator pedal signal, the ESP signal, the gear signal, and the vehicle speed signal. The vehicle working-condition signal is collected through and fed back by an ESP hydraulic control unit and a speed sensor to the ECU. The collected vehicle working-condition signal is used as an input and compared with a preset threshold to determine a working condition of the vehicle, and the working condition of the vehicle as an output result is fed back to the TCU.

The TCU is configured to collect a hydraulic module signal and determine the clutch oil-filling status according to the hydraulic module signal, to perform a centrifugal compensation on the DCT. The TCU is configured to collect a hydraulic module signal. The hydraulic module signal includes a position signal of a piston and a position signal of a hydraulic valve plate.

In this implementation, the TCU is configured to collect the hydraulic module signal. The hydraulic module signal includes the position signals of the piston and the hydraulic valve plate. The position signals of the piston and the hydraulic valve plate are collected through and fed back by a sensor of the hydraulic-module to the TCU. The TCU determines the clutch oil-filling status by comparing the collected position signals with a preset working condition, and then controls the centrifugal compensation cut-in timing of the DCT with reference to the vehicle condition.

The accelerator pedal is configured to collect control information from a vehicle owner.

In this implementation, the accelerator pedal belongs to a control apparatus, and a displacement transducer is installed on the accelerator pedal. When a driver steps on the accelerator pedal, the ECU electronic control unit will collect an opening variation and an acceleration of the displacement transducer, and determine the driver's driving intention according to a built-in algorithm, and then send a corresponding control signal to a control motor of an engine throttle, so as to control the engine's power output.

The DCT clutch assembly belongs to an execution apparatus, and the DCT clutch assembly is configured to execute a centrifugal compensation execution instruction issued by the TCU.

In this implementation, the execution apparatus, i.e., the DCT clutch assembly, executes the centrifugal compensation execution instruction issued by the TCU to perform the centrifugal compensation in a state after the clutch is oil-filled, which reduces the impact of the gear during a driving and gear-shifting state and improves the shift smoothness. Based on the same inventive concept, an embodiment of the present application provides a method of centrifugal compensation control for a transmission. Referring to FIG. 2. FIG. 2 shows a step flow chart of a method of centrifugal compensation control for a transmission according to an embodiment of the present application. The method includes the following step: S201, S202, and S203.

In step S201, a vehicle working-condition signal is collected, and a vehicle condition status is determined according to the vehicle working-condition signal.

In this implementation, the centrifugal compensation cut-in timing of the existing controls is only determined based on the engine speed and the actual pressure of the clutch of the transmission. The vehicle working-condition signal is not collected, resulting in abnormal noise in the DCT under a specific working condition. The specific working condition may be an in-situ large-throttle starting state, a large-throttle parking state, and a driving and gear-shifting state. When the vehicle is in the above-mentioned specific working condition, the abnormal gear noise may occur, so the operation coverage of the vehicle working condition is narrow. The ECU collects various working-condition signals during operation of the vehicle. The vehicle working-condition signals are collected through and fed back by the ESP hydraulic control unit and speed sensor to the TCU to expand the operation coverage of working conditions, and the collected vehicle working-condition signals are compared with working conditions corresponding to different preset thresholds to determine a vehicle status corresponding to the current vehicle working-condition signal. In step S202, a hydraulic module signal is collected, and a clutch oil-filling status is determined according to the hydraulic module signal.

In this implementation, in the related arts, the working signal of the hydraulic module of the DCT is not collected, and oil-filling characteristics of the DCT are not fully utilized, resulting in a reduced service life of the gear of the transmission due to the impact of the gear during shifting. The oil-filling characteristics refer to an engagement or a disengagement of the clutch controlled by a wet dual-clutch transmission, which is achieved by filling and releasing hydraulic oil into a hydraulic oil chamber of the clutch. The clutch is engaged when the oil pressure chamber is filled with oil, and the clutch is disengaged when the hydraulic oil in the oil pressure chamber is discharged. The speed of clutch oil-filling has an important impact on a realization of a shift control rule of the DCT, a starting performance of the vehicle, a shift smoothness and other shift quality. The TCU is configured to collect the hydraulic module signal. The TCU is configured to collect the hydraulic module signal. The hydraulic module signal includes the position signals of the piston and the hydraulic valve plate. The clutch oil-filling status is determined by comparing the hydraulic module signal with preset conditions of the hydraulic module signal corresponding to different oil-filling statuses of the clutch.

In step S203, a centrifugal compensation is performed on the transmission according to the vehicle condition status and the clutch oil-filling status.

In this implementation, the TCU combines the vehicle condition status fed back by the ECU with the determined clutch oil-filling status to perform the centrifugal compensation on the DCT to reduce the abnormal gear impact noise generated by the DCT during the vehicle's starting and shifting process.

In the embodiment of the present application, by adding monitoring of multiple vehicle working-condition signals and hydraulic module signals to the DCT centrifugal supplement control strategy, the cut-in timing of the centrifugal compensation for the DCT can be controlled through the vehicle conditions and the operations of the hydraulic module of the transmission, to reduce the abnormal gear impact noise generated by the DCT during the vehicle's starting and shifting process, and improve the product reliability. In one possible implementation, the vehicle working-condition signal includes an accelerator pedal signal, an ESP signal, a gear position signal and a vehicle speed signal, and the vehicle condition status includes an in-situ large-throttle starting state, a large-throttle parking state, and a driving and gear-shifting state.

In this implementation, the vehicle working-condition signal is collected through a signal input device such as an ESP hydraulic control unit and a rotation speed sensor, as a condition for determining the vehicle condition status, and the current vehicle condition status of the vehicle is determined based on the vehicle working-condition signal.

When an opening-degree from the accelerator pedal signal is greater than a first opening-degree threshold, the gear signal is at a first gear, the ESP signal is a brake-free or parking signal, and the vehicle speed signal has a first speed threshold, the vehicle condition status is the in-situ large-throttle starting state.

When the opening-degree from the accelerator pedal signal is greater than the first opening-degree threshold, the gear signal is at the first gear, the ESP signal is a braking or parking signal, and the vehicle speed signal has a second speed threshold, the vehicle condition status is the large-throttle parking state.

When the opening-degree from the accelerator pedal signal is greater than a second opening-degree threshold, the gear signal is at or above a second gear, the ESP signal is the brake-free or parking signal, and the vehicle speed signal has a third speed threshold, the vehicle condition status is the driving and gear-shifting state.

**Table 1: Corresponding conditions between vehicle working-condition signals and vehicle condition statuses**

| Vehicle Condition Status | Opening-degree of Accelerator Pedal | Gear Signal | ESP Signal | Vehicle Speed Signal | Vehicle Condition |
|---|---|---|---|---|---|
| A | Opening-degree above 50% | 1st gear | Brake-free/parking signal | 15 km/h | Starting in-situ at a large throttle |
| B | Opening-degree above 50% | 1st gear | Braking/parking signal | 0 | Parking at a large throttle |
| C | opening-degree above 30% | 2nd gear or above | Brake-free/parking signal | Above 35 km/h | Driving status |

In this implementation, the corresponding conditions between the vehicle working-condition signals and the vehicle condition statuses are shown in Table 1, in case that the opening-degree from the accelerator pedal signal is greater than 50%, the gear signal is at the first gear, and the ESP signal is the brake-free or parking signal and the vehicle speed signal is 15 kilometers per hour, that is, the working conditions corresponding to vehicle condition status A are met in this case, that is, the vehicle is in the in-situ large-throttle starting state in this case.

In case that the opening-degree from the accelerator pedal signal is greater than 50%, the gear signal is at the first gear, the ESP signal is a braking or parking signal and the vehicle speed signal is zero, that is, the working conditions corresponding to vehicle condition status B are met in this case, that is, the vehicle is in the large-throttle parking state in this case.

In case that the accelerator pedal signal is greater than 30%, the gear signal is at or above the second gear, the ESP signal is the brake-free or parking signal and the vehicle speed signal is 35 kilometers per hour, that is, the working conditions corresponding to vehicle condition status C are met in this case, that is, the vehicle is in the driving and gear-shifting state in this case.

In a possible implementation, the hydraulic module signal includes a position signal of a piston and a position signal of a hydraulic valve plate; the clutch oil-filling status includes a status before a clutch is oil-filled and a status after the clutch is oil-filled.

In this implementation, it is determined, by adding signal collections of the position signals of the piston and hydraulic valve plate of the hydraulic module, whether the hydraulic module has completed the oil filling of a hydraulic chamber of the clutch, as a condition for determining the cut-in timing of the centrifugal compensation control, where the oil-filling characteristic of the DCT is fully utilized.

In another possible implementation, a hydraulic module signal is collected, and the step of determining the clutch oil-filling status according to the hydraulic module signal includes that:
It is determined that the clutch oil-filling status is the status before the clutch is oil-filled when the position signal of the hydraulic valve plate is a switched-on signal and the position signal of the piston is moving from a bottom dead center position and to a top dead center position.

It is determined that the clutch oil-filling status is the status after the clutch is oil-filled when the position signal of the hydraulic valve plate is a switched-off signal and the position signal of the piston is moving from the top dead center position toward the bottom dead center position.

**Table 2: Conditions corresponding to the clutch oil-filling status and the hydraulic module signal**

| Position Signal of Piston | Remark s | Position Signal of Hydraulic Valve Plate | Oil Filling Characteristic | Oil-filling Status |
|---|---|---|---|---|
| Bottom dead center to top dead center | Thrust | Switched on | Oil-pressure chamber is filled with oil, and the clutch is engaged | Before the oil is filled |
| Top dead center to bottom dead center | Suction | Switched off | Hydraulic oil in the oil-pressure chamber is discharged, and the clutch is disengaged | after the oil is filled |

In this implementation, the corresponding conditions between the clutch oil-filling status and the hydraulic module signal are shown in Table 2. It is indicated that the piston is at a lower position of the cylinder when the piston position is at the bottom dead center position; and it is indicated that the piston position is at a peak position of the cylinder when the piston position is at the top dead center position. When the position signal of the piston moves from the bottom dead center position toward the top dead center position, indicating that the oil chamber is in an oil-inlet state, then it is indicated that a thrust signal is provided at this time, and the position signal of the hydraulic valve plate is the switched-on signal, and then the oil filling characteristic is to fill the oil-pressure chamber with oil, and the clutch is engaged, that is, the logical relationship corresponding to the clutch before the oil is filled is met in this case, that is, the clutch oil-filling status at this time is the status before the clutch is oil-filled.

When the position signal of the piston moves from the top dead center position toward the bottom dead center position, indicating that the oil chamber is in an oil-outlet state, then it is indicated that a suction signal is provided at this time, and the position signal of the hydraulic valve plate is the switched-off signal. The oil-filling characteristic at this time is to discharge the hydraulic oil from the oil pressure chamber and the clutch is disengaged, that is, the logical relationship corresponding to the clutch after the oil is filled is met at this time, that is, the clutch oil-filling status at this time is the status after the clutch is oil-filled.

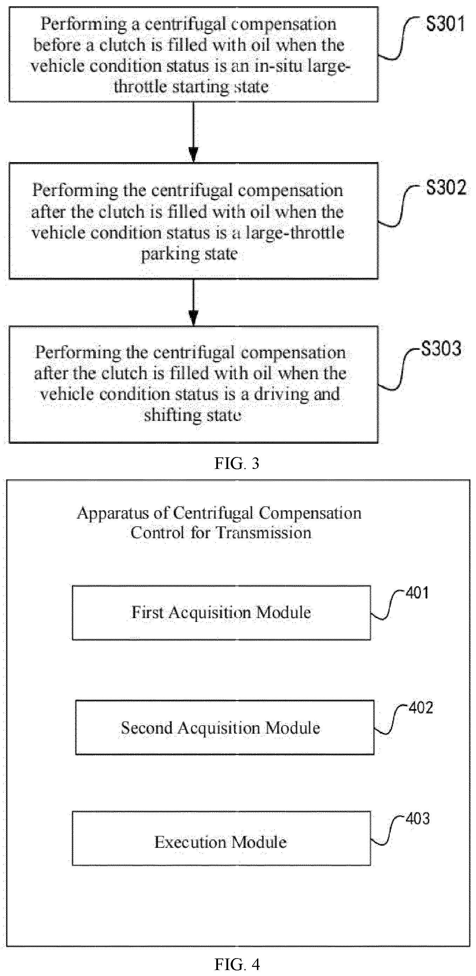

As shown in FIG. 3, the method of performing the centrifugal compensation on the transmission according to the vehicle condition status and the clutch oil-filling status may include the following steps S301-S303.

In this implementation, it is determined according to the vehicle condition status whether a centrifugal compensation is performed with respect to the current working condition, that is, the cut-in timing for the centrifugal compensation is determined according to the clutch oil-filling status. That is, by adding a variety of vehicle working condition information and comparing the information with the preset threshold, the current vehicle condition status is determined, and then combined with the comparison result of the clutch oil-filling status and the preset hydraulic module signal to determine the cut-in timing of the centrifugal compensation, which greatly improves the effect of centrifugal compensation.

**Table 3: Execution results corresponding to a combination of vehicle condition status and clutch oil-filling status**

| Logical Combination | Vehicle Condition Status | Clutch Oil-filling Status | Execution Result |
|---|---|---|---|
| 1 | A | Before the oil is filled | When the vehicle is starting in situ with a large throttle, the centrifugal compensation is performed before the clutch oil chamber is filled with oil. |
| 2 | B | After the oil is filled | When the vehicle is parking with a large throttle, the centrifugal compensation is performed in a state after the clutch is oil-filled. |
| 3 | C | After the oil is filled | When the vehicle is driving and shifting, the centrifugal compensation is performed in a state after the clutch is oil-filled. |

In step S301, the centrifugal compensation is performed before the clutch is filled with oil when the vehicle condition status is the in-situ large-throttle starting state.

In this implementation, the execution result corresponding to the combination of the vehicle condition status and the clutch filling state shown in Table 3 is corresponded to the logic combination 1, that is, when the vehicle condition status is the in-situ large-throttle starting state, that is, the vehicle condition status is corresponded to the logic relationship A. When the clutch oil-filling status is before the oil-filling of the clutch, that is, the vehicle is in the in-situ large-throttle starting state, the centrifugal compensation is performed before the clutch oil chamber is filled with oil.

In step S302, the centrifugal compensation is performed in a state after the clutch is oil-filled when the vehicle condition status is the large-throttle parking state.

In this implementation, the execution result corresponding to the combination of the vehicle condition status and the clutch oil-filling status shown in Table 3 is corresponded to the logic combination 2, that is, when the vehicle condition status is the in-situ large-throttle starting state, that is, the vehicle condition status is corresponded to the logic relationship B, when the clutch oil-filling status is before the oil-filling of the clutch , that is, when the vehicle is in the large-throttle parking state, the centrifugal compensation is performed in the status after the clutch is oil-filled.

In step S303, the centrifugal compensation is performed in a state after the clutch is oil-filled when the vehicle condition status is the driving and gear-shifting state.

In this implementation, the execution result corresponding to the combination of the vehicle condition status and the clutch oil-filling status shown in Table 3 is corresponded to the logic combination 2, that is, when the vehicle condition status is the in-situ large-throttle starting state, that is, the vehicle condition status is corresponded to the logic relationship C, when the clutch oil-filling status is before the oil-filling of the clutch, that is, the vehicle is in the driving and gear-shifting state, the centrifugal compensation is performed in the status after the clutch is oil-filled.

Based on the same inventive concept, an apparatus of centrifugal compensation control for a transmission is provided in this application. Referring to FIG. 4, which is a schematic diagram of an apparatus of centrifugal compensation control for a transmission in an embodiment of the present application. As shown in FIG. 4, the apparatus include: a first acquisition module 401, a second acquisition module 402 and an execution module 403. The first acquisition module 401 is configured to collect a vehicle working-condition signal and determine a vehicle condition status according to the vehicle working-condition signal.

The second acquisition module 402 is configured to collect a hydraulic module signal and determine a clutch oil-filling status according to the hydraulic module signal;

The execution module 403 is configured to perform a centrifugal compensation on the transmission according to the vehicle condition status and the clutch oil-filling status. Based on the same inventive concept, an embodiment of the present application provides a readable storage medium, in which a program of centrifugal compensation control for the transmission is stored. The program of centrifugal compensation control for the transmission, when executed by a processor, causes steps of the method for the centrifugal compensation control of the transmission provided in a first aspect of the embodiments of the present application to be implemented.

Based on the same inventive concept, an embodiment of the present application provides a vehicle, including the apparatus or system of centrifugal compensation control for the transmission as provided in a third aspect of the embodiments of the present application. In this implementation, the vehicle may perform a logical calculation to determine the vehicle working condition by collecting the accelerator pedal signal, the ESP signal, the vehicle gear signal, and the vehicle speed signal. The vehicle working-condition signal is input into the TCU as a condition for determining the vehicle condition status. Then, the TCU collects the position signal of the piston and the position signal of the hydraulic valve plate of the hydraulic module of DCT to determine whether the hydraulic module is before or after the clutch is oil-filled as a condition for determining a cut-in timing, and the centrifugal compensation is performed on the DCT through a logical matching.

It should be understood for persons skilled in the art that examples of the embodiments of the present application may be provided as methods, devices, or computer program products. Thus, the embodiment of the present application may take the form of a full hardware embodiment, a full software embodiment, or an embodiment that combines software and hardware aspects. Furthermore, the embodiment of the present application may take the form of a computer program product implemented on one or more computer-available storage media (including but not limited to a disk storage, a CD-ROM, an optical storage, etc.) having computer-available program code embodied therein. Embodiments of the present application are described with reference to flow charts and/or block diagrams of methods, terminal devices (systems), and computer program products according to the embodiments of the present application. It will be understood that each process and/or block in the flow charts and/or block diagrams, and combinations of processes and/or blocks in the flow charts and/or block diagrams, may be implemented by computer program instructions. These computer program instructions may be provided to a processor of a general-purpose computer, a special-purpose computer, an embedded processor, or other programmable data processing terminal devices to produce a machine such that the instructions, when executed by the processor of the computer or other programmable data processing terminal device, enable the functions specified in the process or processes of the flow charts and/or the block or blocks of the block diagrams to be implemented.

These computer program instructions may also be stored in a computer-readable memory that causes a computer or other programmable data processing terminal equipment to operate in a particular manner, such that the instructions stored in the computer-readable memory produce an article of manufacture including the instruction means, the instruction means implements the functions specified in a process or processes of the flow charts and/or a block or blocks of the block diagrams.

These computer program instructions may also be loaded onto a computer or other programmable data processing terminal equipment, so that a series of operating steps are performed on the computer or other programmable terminal equipment to produce computer-implemented processing, thereby causing the computer or other programmable terminal equipment to perform a computer-implemented process. The instructions executed on provide steps for implementing the functions specified in a process or processes of the flow charts and/or a block or blocks of the block diagrams.

The device embodiments described above are only illustrative. The units described as separate components may or may not be physically separated. The components shown as units may or may not be physical units, that is, they may be located in one location, or may be distributed across multiple network units. Some or all of the modules may be selected according to actual needs to achieve the purpose of the solution of this embodiment, that, for persons of ordinary skill in the art can be understood and implemented without any creative effort.

Various component embodiments of the present application may be implemented in hardware, or in software modules running on one or more processors, or in a combination thereof. It should be understood for persons skilled in the art that a microprocessor or a digital signal processor (DSP) may be used in practice to implement some or all functions of some or all components in the computing processing device according to the embodiments of the present application. The present application may also be implemented as an apparatus or device program (e.g., the computer program and computer program product) for performing part or all of the methods described herein. Such a program for implementing the present application may be stored on a computer-readable medium, or may be in the form of one or more signals. Such signals may be downloaded from an Internet website, or provided on a carrier signal, or in any other form.

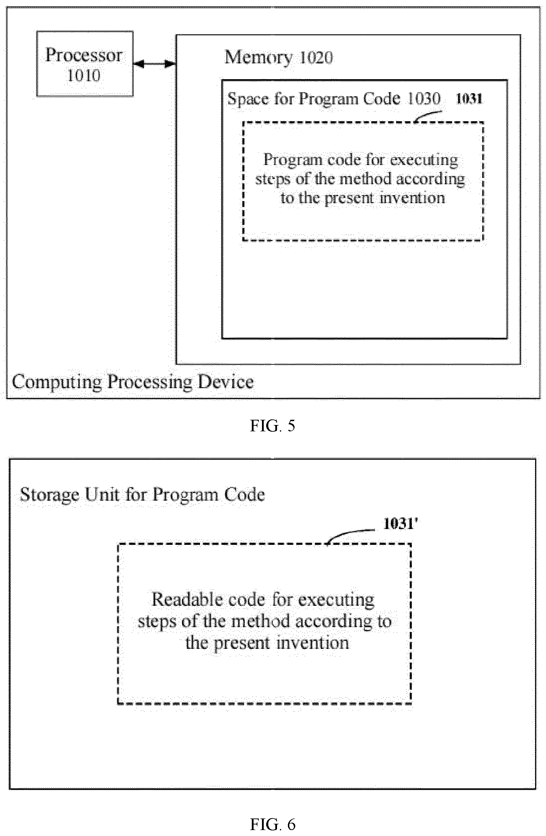

For example, FIG. 5 shows a computing processing device that may implement the methods according to the present application. The computing processing device conventionally includes a processor 1010 and a computer program product or computer-readable medium in the form of memory 1020. The memory 1020 may be electronic memory such as a flash memory, an EEPROM (Electrically Erasable Programmable Read Only Memory), an EPROM, a hard disk, or a ROM. The memory 1020 has a storage space 1030 for program codes 1031 for executing any method steps in the above-mentioned methods. For example, the storage space 1030 for program codes may include individual program codes 1031 respectively used to implement various steps in the above method. These program codes may be read from or written into one or more computer program products. These computer program products include program code carriers such as a hard disk, a compact disk (CD), a memory card or a floppy disk. Such computer program products are typically portable or fixed storage units as described with reference to FIG. 6. The storage unit may have storage segments, storage spaces, etc. arranged similarly to the memory 1020 in the computing processing device of FIG. 5. The program code may, for example, be compressed in a suitable form. Typically, the storage unit includes a computer-readable code 1031', i.e., a code that can be read by, for example, a processor such as 1010, which code, when executed by a computing processing device, causes the computing processing device to perform various steps of the methods described above.

Although preferred embodiments of the embodiments of the present application have been described, those skilled in the art may make additional variations and modifications to these embodiments as long as they are in accordance with the claims.

Finally, it should be noted that in this article, relational terms such as first and second are only used to distinguish one entity or operation from another entity or operation, and do not necessarily require or imply any such actual relationship or sequence between these entities or operations. Furthermore, the terms "comprise," "include," or any other variation thereof are intended to cover a non-exclusive inclusion such that a process, a method, an article, or a terminal equipment that includes a list of elements includes not only those elements, but also elements not expressly listed or other elements inherent to such process, method, article or terminal equipment. In the absence of further limitation, an element defined by the statement "comprises/comprising a..." does not exclude the presence of additional identical elements in a process, method, article or terminal equipment that includes the stated element.

The above is a detailed introduction to a method of centrifugal compensation control for a transmission, a device, a system, a storage medium and a vehicle provided by the present application. Specific examples are used in this article to illustrate the principles and implementation methods of the present invention.

In summary, the content of this specification should not be construed as a limitation on the invention as defined in the claims.

## Claims

1. A method of cut-in timing for centrifugal compensation control for a transmission, the method applied to a Dual-Clutch Transmission, DCT, comprises steps of:
(S201) collecting a vehicle working-condition signal (101), and determining a vehicle condition status according to the vehicle working-condition signal (101), wherein the vehicle working-condition signal (101) comprises an accelerator pedal signal (201), an Electronic Stability Program, ESP, signal (202), a gear signal (203), and a vehicle speed signal (204), and the vehicle condition status comprises an in-situ large-throttle starting state, a large-throttle parking state, and a driving and gear-shifting state;
(S202) collecting a hydraulic module signal (102), and determining a clutch oil-filling status according to the hydraulic module signal (102), wherein the hydraulic module signal comprises a position signal of a piston (202) and a position signal of a hydraulic valve plate (204), and the clutch oil-filling status comprises a status before the clutch is oil-filled and a status after the clutch is oil-filled;
(S203) performing a centrifugal compensation on the transmission (103) according to the vehicle condition status and the clutch oil-filling status;
wherein the step of performing the centrifugal compensation on the transmission according to the vehicle condition status and the clutch oil-filling status comprises:
determining, according to the vehicle condition status, whether the centrifugal compensation is performed with respect to a current working condition; and
determining, according to the clutch oil-filling status, the cut-in timing for the centrifugal compensation; wherein:
(S301) the centrifugal compensation is performed in a state before a clutch is oil-filled when the vehicle condition status is an in-situ large-throttle starting state;
(S302) the centrifugal compensation is performed in a state after the clutch is oil-filled when the vehicle condition status is a large-throttle parking state; and
(S303) the centrifugal compensation is performed in a state after the clutch is oil-filled when the vehicle condition status is a driving and gear-shifting state.

2. The method of centrifugal compensation control for the transmission according to claim 1, wherein the step of determining the vehicle condition status according to the vehicle working-condition signal (101) comprises:
determining that the vehicle condition status is the in-situ large-throttle starting state in case that an opening-degree from the accelerator pedal signal (201) is greater than a first opening-degree threshold, the gear signal (203) is at a first gear, the ESP signal (202) is a break-free or parking signal, and the vehicle speed signal (204) has a first speed threshold;
determining that the vehicle condition status is the large-throttle parking state in case that the opening-degree from the accelerator pedal signal (201) is greater than the first opening-degree threshold, the gear signal (203) is at the first gear, the ESP signal (202) is a braking or parking signal, and the vehicle speed signal (204) has a second speed threshold; and
determining that the vehicle condition status is the driving and gear-shifting state in case that the opening-degree from the accelerator pedal signal (201) is greater than a second opening-degree threshold, the gear signal (203) is at or above a second gear, the ESP signal (202) is the brake-free or parking signal, and the vehicle speed signal (204) has a third speed threshold.

3. The method of centrifugal compensation control for the transmission according to claim 1 or 2, wherein the step of determining the clutch oil-filling status according to the hydraulic module signal comprises:
determining that the clutch oil-filling status is the status before the clutch is oil-filled in case that the position signal of the piston (202) moves from a bottom dead center position toward a top dead center position and the position signal of the hydraulic valve plate (204) is a switched-on signal; and
determining that the clutch oil-filling status is the status after the clutch is oil-filled in case that the position signal of the piston (202) moves from the top dead center position toward the bottom dead center position and the position signal of the hydraulic valve plate (204) is a switched-off signal.

4. A system of cut-in timing for centrifugal compensation control for a Dual Clutch transmission, DCT, wherein the system comprises:
an Electronic Control Unit, ECU, configured to collect a vehicle working-condition signal (101) and to determine a vehicle condition status according to the vehicle working-condition signal (101), the vehicle working-condition signal (101) comprising an accelerator pedal signal (201), an Electronic Stability Program, ESP, signal (202), a gear signal (203), and a vehicle speed signal (204), wherein the vehicle condition status comprises an in-situ large-throttle starting state, a large-throttle parking state, and a driving and gear-shifting state;
a Transmission Control Unit, TCU, configured to collect a hydraulic module signal (102) and to determine a clutch oil-filling status according to the hydraulic module signal (102), and, to perform a centrifugal compensation on the DCT, the TCU is configured to collect the hydraulic module signal (102) comprising a position signal of a piston (202) and a position signal of a hydraulic valve plate (204), wherein the clutch oil-filling status comprises a status before the clutch is oil-filled and a status after the clutch is oil-filled;
a DCT clutch assembly configured to execute a centrifugal compensation execution instruction issued by the TCU; and
an accelerator pedal configured to collect control information from a vehicle driver,
wherein the TCU is configured to perform the centrifugal compensation on the transmission according to the vehicle condition status and the clutch oil-filling status by:
determining, according to the vehicle condition status, whether the centrifugal compensation is performed with respect to a current working condition; and
determining, according to the clutch oil-filling status, the cut-in timing for the centrifugal compensation, wherein the TCU performs:
the centrifugal compensation in a state before a clutch is oil-filled when the vehicle condition status is an in-situ large-throttle starting state;
the centrifugal compensation in a state after the clutch is oil-filled when the vehicle condition status is a large-throttle parking state; and
the centrifugal compensation in a state after the clutch is oil-filled when the vehicle condition status is a driving and gear-shifting state.

5. A vehicle comprising the system of centrifugal compensation control for the transmission according to claim 4.

6. An electronic device, comprising a processor (1010), a memory (1020), and a program or instruction (1031) stored on the memory (1020) and executable on the processor (1010), the program or instruction (1031) when executed by the processor (1010) enables steps of the method of centrifugal compensation control for the transmission according to any one of claims 1-3 to be implemented.

7. A computer program comprising a computer readable code that, when running on a computing processing device, causes the computing processing device to perform steps of the method of centrifugal compensation control for the transmission according to any one of claims 1-3.

8. A readable storage medium, **characterized in that**, the readable storage medium stores a program or instruction, and the program or instruction, when executed by a processor, causes the computer program according to claim 7 to be implemented.

## Patentansprüche

1. Verfahren zur Eingriffszeitsteuerung für die Zentrifugalkompensationssteuerung eines Getriebes, wobei das Verfahren, das auf ein Doppel-Kupplungsgetriebe (DCT) angewandt wird, mit den Schritten:
(S201) Erfassen eines Fahrzeugbetriebszustandssignals (101) und Bestimmen eines Fahrzeugzustandsstatus gemäß dem Fahrzeugbetriebszustandssignal (101), wobei das Fahrzeugbetriebszustandssignal (101) ein Beschleunigungspedalsignal (201), ein elektronisches Stabilitätsprogramm-, ESP-, Signal (202), ein Gangsignal (203) und ein Fahrzeuggeschwindigkeitssignal (204) aufweist und der Fahrzeugzustandsstatus einen in-situ-Großdrossel-Startzustand, einen Großdrossel-Parkzustand und einen Fahr- und Schaltzustand aufweist;
(S202) Sammeln eines Hydraulikmodulsignals (102) und Bestimmen eines Kupplungsölfüllstatus gemäß dem Hydraulikmodulsignal (102), wobei das Hydraulikmodulsignal ein Positionssignal eines Kolbens (202) und ein Positionssignal einer hydraulischen Ventilplatte (204) aufweist, und der Kupplungsölfüllstatus ein Status vor der Ölfüllung der Kupplung und ein Status nach der Ölfüllung der Kupplung aufweist;
(S203) Durchführen einer Zentrifugalkompensation an dem Getriebe (103) gemäß dem Fahrzeugzustandsstatus und dem Kupplungsölfüllstatus;
wobei der Schritt des Durchführens der Zentrifugalkompensation an dem Getriebe gemäß dem Fahrzeugzustandsstatus und dem Kupplungsölfüllstatus aufweist:
Bestimmen, gemäß dem Fahrzeugzustandsstatus, ob die Zentrifugalkompensation bezüglich eines aktuellen Arbeitszustands durchgeführt wird; und
Bestimmen der Eingriffszeitsteuerung für die Zentrifugalkompensation in Abhängigkeit vom Kupplungsölfüllstatus, wobei:
(S301) die Zentrifugalkompensation in einem Zustand durchgeführt wird, bevor eine Kupplung mit Öl gefüllt ist, wenn der Fahrzeugzustandsstatus ein in-situ-Großdrossel-Startzustand ist;
(S302) die Zentrifugalkompensation in einem Zustand durchgeführt wird, nachdem die Kupplung mit Öl gefüllt ist, wenn der Fahrzeugzustandsstatus ein Großdrossel-Parkzustand ist; und
(S303) die Zentrifugalkompensation in einem Zustand durchgeführt wird, nachdem die Kupplung mit Öl gefüllt ist, wenn der Fahrzeugzustandsstatus ein Fahr- und Gangschaltzustand ist.

2. Verfahren zur Zentrifugalkompensationssteuerung für das Getriebe nach Anspruch 1, wobei der Schritt des Bestimmens des Fahrzeugzustandsstatus gemäß dem Fahrzeugbetriebszustandssignal (101) aufweist:
Bestimmen, dass der Fahrzeugzustandsstatus der in-situ-Großdrossel-Startzustand ist, falls ein Öffnungsgrad des Beschleunigungspedalsignals (201) größer als ein erster Öffnungsgrad-Schwellenwert ist, das Gangsignal (203) sich in einem ersten Gang befindet, das ESP-Signal (202) ein Brems- oder Parksignal ist und das Fahrzeuggeschwindigkeitssignal (204) einen ersten Geschwindigkeitsschwellenwert aufweist;
Bestimmen, dass der Fahrzeugzustandsstatus der Großdrossel-Parkzustand ist, falls der Öffnungsgrad des Beschleunigungspedalsignals (201) größer ist als der erste Öffnungsgrad-Schwellenwert, das Gangsignal (203) sich im ersten Gang befindet, das ESP-Signal (202) ein Brems- oder Parksignal ist und das Fahrzeuggeschwindigkeitssignal (204) einen zweiten Geschwindigkeitsschwellenwert hat; und
Bestimmen, dass der Fahrzeugzustandsstatus der Fahr- und Schaltzustand ist, falls der Öffnungsgrad des Beschleunigungspedalsignals (201) größer als ein zweiter Schwellenwert für den Öffnungsgrad ist, das Gangsignal (203) bei oder oberhalb eines zweiten Gangs ist, das ESP-Signal (202) das Brems- oder Parksignal ist und das Fahrzeuggeschwindigkeitssignal (204) einen dritten Schwellenwert für die Geschwindigkeit hat.

3. Verfahren zur Zentrifugalkompensationssteuerung für das Getriebe nach Anspruch 1 oder 2, wobei der Schritt des Bestimmens des Kupplungsölfüllstatus gemäß dem Hydraulikmodulsignal aufweist:
Bestimmen, dass der Kupplungsölfüllstatus der Status, bevor die Kupplung mit Öl gefüllt wird, ist, falls das Positionssignal des Kolbens (202) sich von einer unteren Totpunktposition in Richtung einer oberen Totpunktposition bewegt und das Positionssignal der Hydraulikventilplatte (204) ein Einschaltsignal ist; und
Bestimmen, dass der Kupplungsölfüllstatus der Status, nachdem die Kupplung mit Öl gefüllt ist, ist, falls das Positionssignal des Kolbens (202) sich von der oberen Totpunktposition in Richtung der unteren Totpunktposition bewegt und das Positionssignal der hydraulischen Ventilplatte (204) ein Ausschaltsignal ist.

4. Eingriffszeitsteuerungssystem zur Fliehkraftkompensationssteuerung für ein Doppel-Kupplungsgetriebe, DCT, wobei das System aufweist:
eine elektronische Steuereinheit, ECU, die konfiguriert ist, ein Fahrzeugbetriebszustandssignal (101) zu erfassen und einen Fahrzeugzustandsstatus gemäß dem Fahrzeugbetriebszustandssignal (101) zu bestimmen, wobei das Fahrzeugbetriebszustandssignal (101) ein Beschleunigungspedalsignal (201), ein elektronisches Stabilitätsprogramm-, ESP-, Signal (202), ein Gangsignal (203) und ein Fahrzeuggeschwindigkeitssignal (204) aufweist, wobei der Fahrzeugzustandsstatus einen in-situ-Großdrossel-Startzustand, einen Großdrossel-Parkzustand und einen Fahr- und Schaltzustand aufweist;
eine Getriebesteuerungseinheit, TCU, die konfiguriert ist, ein Hydraulikmodulsignal (102) zu erfassen und einen Kupplungsölfüllstatus gemäß dem Hydraulikmodulsignal (102) zu bestimmen, und, um eine Zentrifugalkompensation an der DCT durchzuführen, die TCU konfiguriert ist, das Hydraulikmodulsignal (102) zu erfassen, das ein Positionssignal eines Kolbens (202) und ein Positionssignal einer Hydraulikventilplatte (204) umfasst, wobei der Kupplungsölfüllstatus einen Status, bevor die Kupplung mit Öl gefüllt ist, und einen Status, nachdem die Kupplung mit Öl gefüllt ist, aufweist;
eine DCT-Kupplungsanordnung, die konfiguriert ist, eine von der TCU ausgegebene Anweisung zur Ausführung einer Zentrifugalkompensation auszuführen; und
ein Gaspedal, das konfiguriert ist, Steuerinformationen von einem Fahrzeugfahrer zu sammeln,
wobei die TCU konfiguriert ist, die Zentrifugalkompensation an dem Getriebe gemäß dem Fahrzeugzustandsstatus und dem Kupplungsölfüllstatus durchzuführen, durch:
Bestimmen, entsprechend dem Fahrzeugzustandsstatus, ob die Zentrifugalkompensation in Bezug auf einen aktuellen Arbeitszustand durchgeführt wird; und
Bestimmen der Eingriffszeitsteuerung für die Zentrifugalkompensation in Abhängigkeit vom Kupplungsölfüllstatus, wobei die TCU durchführt:
die Zentrifugalkompensation in einem Zustand, bevor eine Kupplung mit Öl gefüllt ist, wenn der Fahrzeugzustandsstatus ein in situ Großdrossel-Startzustand ist;
die Zentrifugalkompensation in einem Zustand, nachdem die Kupplung mit Öl gefüllt ist, wenn der Fahrzeugzustandsstatus ein Großdrossel-Parkzustand ist; und
die Zentrifugalkompensation in einem Zustand, nachdem die Kupplung mit Öl gefüllt ist, wenn der Fahrzeugzustandsstatus ein Fahr- und Schaltzustand ist.

5. Fahrzeug, welches das System der Fliehkraftkompensationssteuerung für das Getriebe nach Anspruch 4 aufweist.

6. Elektronische Vorrichtung, die einen Prozessor (1010), einen Speicher (1020) und ein Programm oder einen Befehl (1031) aufweist, das bzw. der in dem Speicher (1020) gespeichert ist und von dem Prozessor (1010) ausgeführt werden kann, wobei das Programm oder der Befehl (1031), wenn es bzw. er von dem Prozessor (1010) ausgeführt wird, es ermöglicht, Schritte des Verfahrens der Fliehkraftkompensationssteuerung für das Getriebe nach einem der Ansprüche 1 bis 3 zu implementieren.

7. Computerprogramm, das einen computerlesbaren Code aufweist, der, wenn er auf einer Computerverarbeitungsvorrichtung ausgeführt wird, die Computerverarbeitungsvorrichtung veranlasst, Schritte des Verfahrens der Fliehkraftkompensationssteuerung für das Getriebe nach einem der Ansprüche 1-3 auszuführen.

8. Lesbares Speichermedium, **dadurch gekennzeichnet, dass** das lesbare Speichermedium ein Programm oder einen Befehl speichert und das Programm oder der Befehl, wenn es bzw. er von einem Prozessor ausgeführt wird, bewirkt, dass das Computerprogramm nach Anspruch 7 implementiert wird.

## Revendications

1. Procédé de décision de déclenchement d'une commande de compensation centrifuge pour une boîte de vitesses, le procédé, qui est appliqué à une boîte de vitesses à double embrayage, DCT, comprenant les étapes suivantes :
(S201) la collecte d'un signal de condition de fonctionnement de véhicule (101) et la détermination d'un état de condition de véhicule en fonction du signal de condition de fonctionnement de véhicule (101), dans lequel le signal de condition de fonctionnement de véhicule (101) comprend un signal de pédale d'accélérateur (201), un signal de programme de stabilité électronique, ESP, (202), un signal d'engrenage(s) (203) et un signal de vitesse de véhicule (204), et l'état de condition de véhicule comprend un état de démarrage à grande ouverture du papillon des gaz/à fort régime in situ, un état de stationnement à fort régime et un état de conduite et de changement de vitesse ;
(S202) la collecte d'un signal de module hydraulique (102) et la détermination d'un état de remplissage d'huile d'embrayage en fonction du signal de module hydraulique (102), dans lequel le signal de module hydraulique comprend un signal de position d'un piston (202) et un signal de position d'une plaque de soupape hydraulique (204), et l'état de remplissage d'huile d'embrayage comprend un état avant que l'embrayage n'ait été rempli d'huile et un état après que l'embrayage a été rempli d'huile ; et
(S203) la réalisation d'une compensation centrifuge sur la boîte de vitesses (103) en fonction de l'état de condition de véhicule et de l'état de remplissage d'huile d'embrayage ;
dans lequel l'étape de réalisation de la compensation centrifuge sur la boîte de vitesses en fonction de l'état de condition de véhicule et de l'état de remplissage d'huile d'embrayage comprend :
la détermination, en fonction de l'état de condition de véhicule, de si la compensation centrifuge est réalisée ou non en relation avec une condition de fonctionnement courante ; et
la détermination, en fonction de l'état de remplissage d'huile d'embrayage, de la décision de déclenchement de la compensation centrifuge ; dans lequel :
(S301) la compensation centrifuge est réalisée dans un état avant qu'un embrayage n'ait été rempli d'huile lorsque l'état de condition de véhicule est un état de démarrage à fort régime in situ ;
(S302) la compensation centrifuge est réalisée dans un état après que l'embrayage a été rempli d'huile lorsque l'état de condition de véhicule est un état de stationnement à fort régime ; et
(S303) la compensation centrifuge est réalisée dans un état après que l'embrayage a été rempli d'huile lorsque l'état de condition de véhicule est un état de conduite et de changement de vitesse.

2. Procédé de commande de compensation centrifuge pour la boîte de vitesses selon la revendication 1, dans lequel l'étape de détermination de l'état de condition de véhicule en fonction du signal de condition de fonctionnement de véhicule (101) comprend :
la détermination du fait que l'état de condition de véhicule est l'état de démarrage à fort régime in situ dans le cas où un degré d'ouverture en provenance du signal de pédale d'accélérateur (201) est supérieur à un premier seuil de degré d'ouverture, le signal d'engrenage(s) (203) est au niveau d'un premier engrenage, le signal ESP (202) est un signal de non freinage ou de stationnement et le signal de vitesse de véhicule (204) présente un premier seuil de vitesse ;
la détermination du fait que l'état de condition de véhicule est l'état de stationnement à fort régime dans le cas où le degré d'ouverture en provenance du signal de pédale d'accélérateur (201) est supérieur au premier seuil de degré d'ouverture, le signal d'engrenage(s) (203) est au niveau du premier engrenage, le signal ESP (202) est un signal de freinage ou de stationnement et le signal de vitesse de véhicule (204) présente un deuxième seuil de vitesse ; et
la détermination du fait que l'état de condition de véhicule est l'état de conduite et de changement de vitesse dans le cas où le degré d'ouverture en provenance du signal de pédale d'accélérateur (201) est supérieur à un second seuil de degré d'ouverture, le signal d'engrenage (203) est au niveau d'un second engrenage ou au-delà, le signal ESP (202) est un signal de non freinage ou de stationnement et le signal de vitesse de véhicule (204) présente un troisième seuil de vitesse.

3. Procédé de commande de compensation centrifuge pour la boîte de vitesses selon la revendication 1 ou 2, dans lequel l'étape de détermination de l'état de remplissage d'huile d'embrayage en fonction du signal de module hydraulique comprend :
la détermination du fait que l'état de remplissage d'huile d'embrayage est l'état avant que l'embrayage n'ait été rempli d'huile dans le cas où le signal de position du piston (202) passe d'une position de point mort bas à une position de point mort haut et le signal de position de la plaque de soupape hydraulique (204) est un signal d'activation ; et
la détermination du fait que l'étape de remplissage d'huile d'embrayage est l'état après que l'embrayage a été rempli d'huile dans le cas où le signal de position du piston (202) passe de la position de point mort haut à la position de point mort bas et le signal de position de la plaque de soupape hydraulique (204) est un signal de désactivation.

4. Système de décision de déclenchement d'une commande de compensation centrifuge pour une boîte de vitesses à double embrayage, DCT, dans lequel le système comprend :
une unité de commande électronique, ECU, configurée pour collecter un signal de condition de fonctionnement de véhicule (101) et pour déterminer un état de condition de véhicule en fonction du signal de condition de fonctionnement de véhicule (101), le signal de condition de fonctionnement de véhicule (101) comprenant un signal de pédale d'accélérateur (201), un signal de programme de stabilité électronique, ESP, (202), un signal d'engrenage(s) (203) et un signal de vitesse de véhicule (204), dans lequel l'état de condition de véhicule comprend un état de démarrage à grande ouverture du papillon des gaz/à fort régime in situ, un état de stationnement à fort régime et un état de conduite et de changement de vitesse ;
une unité de commande de transmission/boîte de vitesses, TCU, configurée pour collecter un signal de module hydraulique (102) et pour déterminer un état de remplissage d'huile d'embrayage en fonction du signal de module hydraulique (102) et pour réaliser une compensation centrifuge sur la DCT, et la TCU est configurée pour collecter le signal de module hydraulique (102) qui comprend un signal de position d'un piston (202) et un signal de position d'une plaque de soupape hydraulique (204), dans lequel l'état de remplissage d'huile d'embrayage comprend un état avant que l'embrayage n'ait été rempli d'huile et un état après que l'embrayage a été rempli d'huile ;
un assemblage d'embrayages de DCT configuré pour exécuter une instruction d'exécution de compensation centrifuge qui est délivrée par la TCU ; et
une pédale d'accélérateur configurée pour collecter une information de commande en provenance d'un conducteur de véhicule,
dans lequel la TCU est configurée pour réaliser la compensation centrifuge sur la boîte de vitesses en fonction de l'état de condition de véhicule et de l'état de remplissage d'huile d'embrayage en :
déterminant, en fonction de l'état de condition de véhicule, si la compensation centrifuge est ou non réalisée en relation avec une condition de fonctionnement courante ; et en
déterminant, en fonction de l'état de remplissage d'huile d'embrayage, la décision de déclenchement de la compensation centrifuge, dans lequel la TCU réalise :
la compensation centrifuge dans un état avant qu'un embrayage n'ait été rempli d'huile lorsque l'état de condition de véhicule est un état de démarrage à fort régime in situ ;
la compensation centrifuge dans un état après que l'embrayage a été rempli d'huile lorsque l'état de condition de véhicule est un état de stationnement à fort régime ; et
la compensation centrifuge dans un état après que l'embrayage a été rempli d'huile lorsque l'état de condition de véhicule est un état de conduite et de changement de vitesse.

5. Véhicule comprenant le système de commande de compensation centrifuge pour la boîte de vitesses selon la revendication 4.

6. Dispositif électronique, comprenant un processeur (1010), une mémoire (1020) et un programme ou une instruction (1031) qui est stocké(e) dans la mémoire (1020) et qui peut être exécuté(e) sur le processeur (1010), et le programme ou l'instruction (1031), lorsqu'il ou lorsqu'elle est exécuté(e) par le processeur (1010), permet la mise en œuvre d'étapes du procédé de commande de compensation centrifuge pour la boîte de vitesses selon l'une quelconque des revendications 1 à 3.

7. _ Programme informatique comprenant un code lisible par ordinateur qui, lorsqu'il est exécuté sur un dispositif de traitement informatique, force le dispositif de traitement informatique à réaliser des étapes du procédé de commande de compensation centrifuge pour la boîte de vitesses selon l'une quelconque des revendications 1 à 3.

8. Support de stockage lisible, **caractérisé en ce que** le support de stockage lisible stocke un programme ou une instruction, et le programme ou l'instruction, lorsqu'il ou lorsqu'elle est exécuté(e) par un processeur, provoque la mise en œuvre du programme informatique selon la revendication 7.
